# EUROPEAN PATENT APPLICATION

(11) **EP 4 793 392 A1**
(43) Date of publication of application: **19.08.2026**
(21) Application number: 24881240.6
(22) Date of filing: 27.08.2024
(51) Int. Cl.: C22C 38/54, C22C 38/02, C22C 38/04, C22C 38/06, C22C 38/44, C22C 38/46, C22C 38/50, C22C 33/06, C21D 8/02, C21D 1/18

(54) **800-MPA-GRADE QUENCHED AND TEMPERED ULTRAHIGH-STRENGTH HYDROGEN-RESISTANT STEEL PLATE FOR PRESSURE VESSEL, AND PREPARATION METHOD THEREFOR**

(30) Priority: 23.10.2023 CN 202311373909
(71) Applicant: Nanjing Iron & Steel Co., Ltd., Nanjing, Jiangsu 210044 (CN)
(72) Inventor: QIAO, Mingliang, Nanjing, Jiangsu 210044 (CN); LIU, Tao, Nanjing, Jiangsu 210044 (CN); CUI, Qiang, Nanjing, Jiangsu 210044 (CN); CHEN, Linheng, Nanjing, Jiangsu 210044 (CN); FAN, Huibing, Nanjing, Jiangsu 210044 (CN); MENG, Lingming, Nanjing, Jiangsu 210044 (CN); TANG, Chunxia, Nanjing, Jiangsu 210044 (CN); QIN, Yurong, Nanjing, Jiangsu 210044 (CN)
(74) Representative: Gong, Jinping
(86) International application number: PCT/CN2024/114683
(87) International publication number: WO 2025/086872

(57) **Abstract**

Provided are an 800 MPa grade quenched and tempered hydrogen-resistant ultra-high-strength steel plate for a pressure vessel and a manufacturing method for the steel plate, belonging to the field of vessel steel manufacturing. The steel plate includes the following chemical composition: C, Si, Mn, P, S, Ni, Cr, Mo, V, Ti, Als, B, and the balance being Fe and inevitable impurity elements. The manufacturing method includes: producing a continuously cast slab with target composition by sequentially carrying out smelting and continuous casting procedures on a steel slab, following by heating, rolling, heat treatment, inspection, and warehousing of the continuous casting slab. A novel Ni-Cr-Mo composition design system can ensure excellent hydrogen embrittlement resistance of the steel plate, and an 800 MPa grade high-strength quenched and tempered hydrogen-resistant extra-thick steel plate with a thickness of ≤ 80 mm for a pressure vessel is produced by adopting a proper off-line quenching and high-temperature tempering heating treatment process, which breaks through bottlenecks in the prior art, satisfies requirements for high strength and toughness of the quenched and tempered hydrogen-resistant ultra-thick steel plate for the pressure vessel, improves service safety of the pressure vessel, and also lays a foundation for development, production, and application of a new generation of quenched and tempered hydrogen-resistant high-strength steel for the pressure vessel.

## Description

### TECHNICAL FIELD

The present disclosure belongs to the field of manufacturing of steel for vessels, and in particular to an 800 MPa grade quenched and tempered hydrogen-resistant ultra-high-strength steel plate for a pressure vessel, and a manufacturing method of the steel plate.

### BACKGROUND

In existing hydrogen storage technologies, high-pressure gaseous hydrogen storage, due to its high maturity and low cost, is the most suitable technical solution for large-scale hydrogen storage and transportation at present. This technical solution requires the construction of 100-cubic-meter-class high-pressure hydrogen storage tanks and hundreds of kilometers of high-pressure hydrogen transmission pipelines. For large-scale hydrogen storage and transportation demands, materials suitable for high-pressure hydrogen storage and transportation equipment constitute a key core technology requiring breakthrough. Key technical characteristics of such materials include high strength, weldability, favorable strength-toughness matching, as well as resistance to hydrogen corrosion and hydrogen embrittlement. At present, pressure vessel equipment is developing toward higher parameters and larger scales. For safety considerations, the requirements for limit specifications, strength and toughness of steels used for pressure vessels have been increased accordingly. In terms of the actual mechanical properties of steel plates, most ultra-high-strength quenched and tempered steel plates for pressure vessels in China not only lack data support for hydrogen resistance performance, but also suffer from shortcomings such as narrow thickness specification range, poor surface quality, and low impact toughness, failing to meet the service requirements of current large-scale high-parameter hydrogen-resistant pressure vessels.

For example, in Patent CN104532159A, a quenched and tempered high-strength steel with a yield strength of 700 MPa and a production method for the steel are provided, where the steel includes chemical composition as follows: C, Si, Mn, Cr, Mo, Ni, Nb, Ti, V, B, Al, Ca, N, P, S, O, and the balance being Fe and inevitable impurities. The steel plate in this patent has a physical yield strength of 700 to 850 MPa and a tensile strength of 750 to 900 MPa. Although the strength is high, elongation is merely greater than 14%, and impact energy at -40°C is merely greater than 40 J, indicating that plastic toughness of the steel plate is at a relatively low level.

For example, in Patent CN109112421A, a steel 07Cr2AlMoR for a pressure vessel, and production for the steel are provided, where the steel includes chemical composition as follows: C, Mn, Cr, Mo, Alt, S, P, and Si, and the balance being Fe and other inevitable impurities. Although the steel plate produced by the production method disclosed in this patent has a wide thickness range, up to 80 mm, the physical strength-toughness level of the steel plate is relatively low, with tensile strength less than 500 MPa, impact toughness less than 100 J, and a quality grade of only Grade D.

For another example, in Patent CN115261714A, a steel for a pressure vessel, and manufacturing method for the steel are provided, where the steel includes chemical composition as follows: C, Si, Mn, P, S, Al, V, Nb, N, Cu, Sn, Sb, Mg, and the balance being Fe and other inevitable impurities. This patent only discloses a production method for a relatively thin steel plate with a thickness of ≤ 55 mm, but makes no mention of a production process for a thickergauge steel plate, failing to meet application performance requirements for an extra-thick plate. In addition, none of the above patents mention the hydrogen resistance performance of the steel plate.

### SUMMARY

Objective of the present disclosure: an objective of the present disclosure is to provide an 800 MPa grade quenched and tempered hydrogen-resistant ultra-high-strength steel plate for a pressure vessel and a manufacturing method for the steel plate.

Technical solutions: an 800 MPa grade quenched and tempered hydrogen-resistant ultra-high-strength steel plate for a pressure vessel provided by the present disclosure includes chemical composition in percentage by weight as follows: 0.07 to 0.13% of C, 0.10 to 0.45% of Si, 0.80 to 1.50% of Mn, less than or equal to 0.012% of P, less than or equal to 0.005% of S, 0.60 to 1.50% of Ni, 0.25 to 0.80% of Cr, 0.30 to 0.70% of Mo, 0.01 to 0.05% of V, less than or equal to 0.030% of Ti, less than or equal to 0.05% of Als, 0.0005 to 0.0030% of B, and the balance being Fe and inevitable impurity elements.

The steel plate includes chemical composition in percentage by weight as follows: 0.07% of C, 0.12% of Si, 0.93% of Mn, 0.011% of P, 0.005% of S, 0.61% of Ni, 0.27% of Cr, 0.32% of Mo, 0.015% of V, 0.017% of Ti, 0.031% of Als, 0.0007% of B, and the balance being Fe and inevitable impurity elements.

The steel plate includes chemical composition in percentage by weight as follows: 0.09% of C, 0.23% of Si, 0.99% of Mn, 0.010% of P, 0.004% of S, 0.88% of Ni, 0.47% of Cr, 0.47% of Mo, 0.022% of V, 0.019% of Ti, 0.037% of Als, 0.0014% of B, and the balance being Fe and inevitable impurity elements.

The steel plate includes chemical composition in percentage by weight as follows: 0.11% of C, 0.29% of Si, 1.18% of Mn, 0.009% of P, 0.003% of S, 0.99% of Ni, 0.78% of Cr, 0.56% of Mo, 0.039% of V, 0.021% of Ti, 0.040% of Als, 0.0026% of B, and the balance being Fe and inevitable impurity elements.

The steel plate includes chemical composition in percentage by weight as follows: 0.12% of C, 0.36% of Si, 1.33% of Mn, 0.010% of P, 0.003% of S, 1.17% of Ni, 0.65% of Cr, 0.60% of Mo, 0.045% of V, 0.023% of Ti, 0.040% of Als, 0.0028% of B, and the balance being Fe and inevitable impurity elements.

The steel plate has chemical composition in weight percent as follows: 0.13% of C, 0.43% of Si, 1.45% of Mn, 0.011% of P, 0.004% of S, 1.46% of Ni, 0.63% of Cr, 0.67% of Mo, 0.047% of V, 0.029% of Ti, 0.047% of Als, 0.0027% of B, and the balance being Fe and inevitable impurity elements.

A manufacturing method for an 800 MPa grade quenched and tempered hydrogen-resistant ultra-high-strength steel plate for a pressure vessel is provided, a steel slab with the same composition as the steel is sequentially subjected to smelting and continuous casting procedures to produce a continuously cast slab with target composition; the continuously cast slab is then subjected to heating, rolling, heat treatment, inspection, warehousing, and other procedures in sequence, with specific preparation steps as follows:
(1) the smelting procedure includes hot metal pretreatment, top-bottom combined blowing in a converter, LF (Ladle Furnace) refining, and RH (Ruhrstahl-Heraeus) refining, where converter smelting has an end-point temperature of 1600 to 1650°C to ensure late-stage carbon pulling and prevent rephosphorization, aluminum is used for deoxidation during the LF refining, with a total duration of 40 to 45 minutes, and an operation under micro positive pressure is applied throughout the process to control an atmosphere within a ladle; a seamless pure calcium wire is fed after RH treatment, and ferroboron is added after homogenization, followed by quiescent stirring for 25 to 30 minutes after wire feeding, thereby ensuring stable slag surface without crusting and no exposure of hot metal;
(2) during the continuous casting procedure, slab soft reduction and electromagnetic stirring technologies are adopted to reduce center segregation and porosity, where a reduction at a solidification end is 5 to 7 mm, and shrouded casting is adopted during continuous casting to prevent secondary oxidation of hot metal;
(3) during the continuous casting slab heating procedure, a heating temperature is 1150 to 1280°C, and a total in-furnace time coefficient is 1.0 to 1.2 min/mm, thereby ensuring a uniform prior austenite microstructure inside the steel;
(4) during the rolling procedure, a controlled rolling and cooling process is adopted, which belongs to two-stage controlled rolling, that is, rolling is carried out in an austenite recrystallization zone and an austenite non-recrystallization zone, with a total compression ratio of not less than 4: an initial rough rolling temperature is ≥ 1,000°C, and a large reduction rate is adopted in this stage; an initial finishing rolling temperature is 810 to 880°C, and sufficient deformation is ensured in this stage to stretch and deform austenite grains along a rolling direction; in addition, through the addition of microalloying elements such as Ti and V, carbonitride particles are induced to precipitate by strain during deformation, which pin austenite grains and inhibit their growth, thereby refining the microstructure after phase transformation; the final finishing rolling temperature is 800 to 850°C; and after rolling, a rolled plate is subjected to laminar cooling, with a self-tempering temperature of 600 to 670°C, and is then air-cooled to a room temperature; and
(5) the heat treatment procedure includes quenching and tempering procedures, where the steel plate is quenched at 850 to 930°C with a holding time coefficient of 1.3 to 1.8 min/mm, tempering is subsequently applied to eliminate residual stress caused by quenching and homogenize the microstructure, thereby achieving stable and excellent comprehensive properties, where the steel plate is tempered at 610 to 670°C with a holding time coefficient of 2.0 to 4.0 min/mm.

The ultra-high-strength hydrogen-resistant steel plate for a pressure vessel according to the present disclosure has a thickness specification of 12 to 80 mm, and has a final microstructure dominated by bainite. The steel plate exhibits excellent actual mechanical properties as follows: under a 25 MPa hydrogen environment, the steel plate has a hydrogen embrittlement index of ≥ 0.75, internal flow detection meeting Grade TI in accordance with NB/T 47013.3, a tensile strength Rₘ of 800 to 900 MPa, elongation A of ≥ 17%, and KV₂ at -40°C of ≥ 100 J.

Beneficial effects: Compared with the prior art, the present disclosure has characteristics as follows. 1. Through first-principles calculation of hydrogen resistance and chemical composition design of the material, excellent hydrogen resistance of the steel plate is ensured, a steel plate with a thickness of 12 to 80 mm is produced, which covers a wide range of thickness specifications and has superior strength, toughness, and ductility. Under a 25 MPa hydrogen environment, the steel plate exhibits a hydrogen embrittlement index of ≥ 0.75, a tensile strength Rₘ of 800 to 900 MPa, elongation A of ≥ 17%, and KV₂ at -40°C of ≥ 100 J. 2. Through the configuration of production processes (including smelting, continuous casting, rolling, and heat treatment), internal quality and performance stability of the steel plate are improved, endowing the steel plate with excellent comprehensive mechanical properties. (3) The present disclosure breaks through bottlenecks of the prior art, fills a technical gap of materials for large-scale high-pressure vessels in China, and can promote the formulation of a series of specifications covering pressure vessel equipment, materials, design, construction, application and safety evaluation, as well as the formation of a complete and efficient industrial chain prototype integrating preparation, storage, transportation and terminal application in later period, thereby laying a foundation for the development, production and application of a new generation of quenched and tempered high-strength steel for the pressure vessel.

### BRIEF DESCRIPTION OF THE DRAWINGS

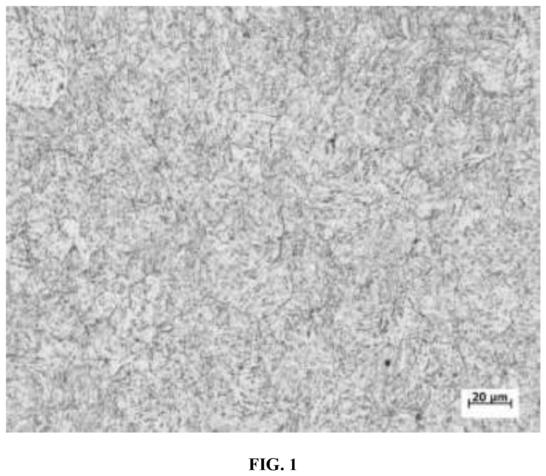

FIG. 1 is an OM (Optical microscopy) image of a microstructure of an ultra-high-strength hydrogen-resistant steel plate for a pressure vessel according to an embodiment of the present disclosure.

### DETAILED DESCRIPTION OF THE EMBODIMENTS

The present disclosure is further described below with reference to accompanying drawings and embodiments.

### Embodiment 1

1. This embodiment provides a quenched and tempered ultra-high-strength hydrogen-resistant steel plate for a pressure vessel, where the steel plate has a thickness of 12 mm and includes chemical composition in mass percentage shown in Table 1.
2. A manufacturing method for a quenched and tempered ultra-high-strength hydrogen-resistant steel plate for a pressure vessel in this embodiment includes smelting, continuous casting, slab heating, rolling, and heat treatment procedures, with specific processes as follows.
   (1) The smelting procedure includes hot metal pretreatment, top-bottom combined blowing in a converter, LF refining, and RH refining, where converter smelting has an end-point temperature of 1,610°C in a total time of 42 min, and an operation under a micro positive pressure is adopted throughout the process to control an atmosphere in a ladle, a seamless pure calcium wire is fed after RH treatment, and ferroboron is added after homogenization, followed by quiescent stirring for 26 min after wire feeding.
   (2) During the continuous casting procedure, slab soft reduction and electromagnetic stirring technologies are adopted to reduce center segregation and porosity, where a reduction at a solidification end is 6.1 mm.
   (3) During a continuously cast slab heating procedure, a heating temperature is 1,150°C, and a total in-furnace time coefficient is 1.0 min/mm.
   (4) During the rolling procedure, a controlled rolling and cooling process is adopted, where an initial rough rolling temperature is 1,050°C, an initial finishing rolling temperature is 815°C, and a final finishing rolling temperature is 800°C; and after rolling, a rolled plate is subjected to laminar cooling, with a re-reddening temperature of 680°C, and then is air-cooled to a room temperature.
   (5) The heat treatment procedure includes quenching and tempering procedures, where a steel plate is quenched at 850°C with a holding time coefficient of 1.6 min/mm, and tempered at 610°C with a holding time coefficient of 4.0 min/mm.
3. The quenched and tempered ultra-high-strength hydrogen-resistant steel plate for a pressure vessel in this embodiment satisfies ultrasonic flaw detection requirements of Grade TI in accordance with NB/T 47013.3, with actual mechanical properties of a product listed in Table 2.

### Embodiment 2

1. This embodiment provides a quenched and tempered ultra-high-strength hydrogen-resistant steel plate for a pressure vessel, where the steel plate has a thickness of 20 mm and includes chemical composition in mass percentage shown in Table 1.
2. A manufacturing method for a quenched and tempered ultra-high-strength hydrogen-resistant steel plate for a pressure vessel in this embodiment includes smelting, continuous casting, slab heating, rolling, and heat treatment procedures, with specific processes as follows.
   (1) The smelting procedure includes hot metal pretreatment, top-bottom combined blowing in a converter, LF refining, and RH refining, where converter smelting has an end-point temperature of 1,645°C in a total time of 43 min, and an operation under a micro positive pressure is adopted throughout the process to control an atmosphere in a ladle, a seamless pure calcium wire is fed after RH treatment, and ferroboron is added after homogenization, followed by quiescent stirring for 27 min after wire feeding.
   (2) During the continuous casting procedure, slab soft reduction and electromagnetic stirring technologies are adopted to reduce center segregation and porosity, wherein a reduction at a solidification end is 6.7 mm.
   (3) During a continuously cast slab heating procedure, a heating temperature is 1,185°C, and a total in-furnace time coefficient is 1.2 min/mm.
   (4) During the rolling procedure, a controlled rolling and cooling process is adopted, wherein an initial rough rolling temperature is 1,030°C, an initial finishing rolling temperature is 865°C, and a final finishing rolling temperature is 820°C; and after rolling, a rolled plate is subjected to laminar cooling, with a re-reddening temperature of 665°C, and then is air-cooled to a room temperature.
   (5) the heat treatment procedure includes quenching and tempering procedures, where a steel plate is quenched at 875°C with a holding time coefficient of 1.3 min/mm, and tempered at 670°C with a holding time coefficient of 3.5 min/mm.
3. The quenched and tempered ultra-high-strength hydrogen-resistant steel plate for a pressure vessel in this embodiment satisfies ultrasonic flaw detection requirements of Grade TI in accordance with NB/T 47013.3, with actual mechanical properties of a product listed in Table 2.

### Embodiment 3

1. This embodiment provides a quenched and tempered ultra-high-strength hydrogen-resistant steel plate for a pressure vessel, where the steel plate has a thickness of 40 mm and includes chemical composition in mass percentage shown in Table 1.
2. A manufacturing method for a quenched and tempered ultra-high-strength hydrogen-resistant steel plate for a pressure vessel in this embodiment includes smelting, continuous casting, slab heating, rolling, and heat treatment procedures, with specific processes as follows.
   (1) The smelting procedure includes hot metal pretreatment, top-bottom combined blowing in a converter, LF refining, and RH refining, wherein converter smelting has an end-point temperature of 1,627°C in a total time of 41 min, and an operation under a micro positive pressure is adopted throughout the process to control an atmosphere in a ladle, a seamless pure calcium wire is fed after RH treatment, and ferroboron is added after homogenization, followed by quiescent stirring for 26 min after wire feeding.
   (2) During the continuous casting procedure, slab soft reduction and electromagnetic stirring technologies are adopted to reduce center segregation and porosity, wherein a reduction at a solidification end is 5.2 mm.
   (3) During a continuously cast slab heating procedure, a heating temperature is 1,220°C, and a total in-furnace time coefficient is 1.0 min/mm.
   (4) During the rolling procedure, a controlled rolling and cooling process is adopted, where an initial rough rolling temperature is 1,045°C, an initial finishing rolling temperature is 875°C, and a final finishing rolling temperature is 840°C; and after rolling, a rolled plate is subjected to laminar cooling, with a re-reddening temperature of 680°C, and then is air-cooled to a room temperature.
   (5) The heat treatment procedure includes quenching and tempering procedures, where a steel plate is quenched at 925°C with a holding time coefficient of 1.5 min/mm, and tempered at 650°C with a holding time coefficient of 2.0 min/mm.
3. The quenched and tempered ultra-high-strength hydrogen-resistant steel plate for a pressure vessel in this embodiment satisfies ultrasonic flaw detection requirements of Grade TI in accordance with NB/T 47013.3, with actual mechanical properties of a product listed in Table 2.

### Embodiment 4

1. This embodiment provides a quenched and tempered ultra-high-strength hydrogen-resistant steel plate for a pressure vessel, where the steel plate has a thickness of 72 mm and includes chemical composition in mass percentage shown in Table 1.
2. A manufacturing method for a quenched and tempered ultra-high-strength hydrogen-resistant steel plate for a pressure vessel in this embodiment includes smelting, continuous casting, slab heating, rolling, and heat treatment procedures, with specific processes as follows.
   (1) The smelting procedure includes hot metal pretreatment, top-bottom combined blowing in a converter, LF refining, and RH refining, wherein converter smelting has an end-point temperature of 1,637°C in a total time of 44 min, and an operation under a micro positive pressure is adopted throughout the process to control an atmosphere in a ladle, a seamless pure calcium wire is fed after RH treatment, and ferroboron is added after homogenization, followed by quiescent stirring for 29 min after wire feeding.
   (2) During the continuous casting procedure, slab soft reduction and electromagnetic stirring technologies are adopted to reduce center segregation and porosity, wherein a reduction at a solidification end is 5.8 mm.
   (3) During a continuously cast slab heating procedure, a heating temperature is 1,253°C, and a total in-furnace time coefficient is 1.2 min/mm.
   (4) During the rolling procedure, a controlled rolling and cooling process is adopted, wherein an initial rough rolling temperature is 1,050°C, an initial finishing rolling temperature is 875°C, and a final finishing rolling temperature is 830°C; and after rolling, a rolled plate is subjected to laminar cooling, with a re-reddening temperature of 630°C, and then is air-cooled to a room temperature.
   (5) The heat treatment procedure includes quenching and tempering procedures, wherein a steel plate is quenched at 890°C with a holding time coefficient of 1.8 min/mm, and tempered at 630°C with a holding time coefficient of 3.0 min/mm;
3. The quenched and tempered ultra-high-strength hydrogen-resistant steel plate for a pressure vessel in this embodiment satisfies ultrasonic flaw detection requirements of Grade TI in accordance with NB/T 47013.3, with actual mechanical properties of a product listed in Table 2.

### Embodiment 5

1. This embodiment provides a quenched and tempered ultra-high-strength hydrogen-resistant steel plate for a pressure vessel, where the steel plate has a thickness of 80 mm and includes chemical composition in mass percentage shown in Table 1.
2. A manufacturing method for a quenched and tempered ultra-high-strength hydrogen-resistant steel plate for a pressure vessel in this embodiment includes smelting, continuous casting, slab heating, rolling, and heat treatment procedures, with specific processes as follows.
   (1) The smelting procedure includes hot metal pretreatment, top-bottom combined blowing in a converter, LF refining, and RH refining, where converter smelting has an end-point temperature of 1,642°C in a total time of 45 min, and an operation under a micro positive pressure is adopted throughout the process to control an atmosphere in a ladle, a seamless pure calcium wire is fed after RH treatment, and ferroboron is added after homogenization, followed by quiescent stirring for 28 min after wire feeding.
   (2) During the continuous casting procedure, slab soft reduction and electromagnetic stirring technologies are adopted to reduce center segregation and porosity, wherein a reduction at a solidification end is 6.3 mm.
   (3) During a continuously cast slab heating procedure, a heating temperature is 1,275°C, and a total in-furnace time coefficient is 1.1 min/mm.
   (4) During the rolling procedure, a controlled rolling and cooling process is adopted, wherein an initial rough rolling temperature is 1,040°C, an initial finishing rolling temperature is 880°C, and a final finishing rolling temperature is 850°C; and after rolling, a rolled plate is subjected to laminar cooling, with a re-reddening temperature of 630°C, and then is air-cooled to a room temperature.
   (5) The heat treatment procedure includes quenching and tempering procedures, where a steel plate is quenched at 910°C with a holding time coefficient of 1.6 min/mm, and tempered at 645°C with a holding time coefficient of 3.0 min/mm.
3. The quenched and tempered ultra-high-strength hydrogen-resistant steel plate for a pressure vessel in this embodiment satisfies ultrasonic flaw detection requirements of Grade TI in accordance with NB/T 47013.3, with actual mechanical properties of a product listed in Table 2.

**Table 1 Mass percent of chemical composition (wt. %)**

| Embodiment | C | Si | Mn | P | S | Cr | Mo | Ni | V | Ti | Als | B |
|---|---|---|---|---|---|---|---|---|---|---|---|---|
| 1 | 0.07 | 0.1 2 | 0.9 3 | 0.01 1 | 0.00 5 | 0.2 7 | 0.3 2 | 0.6 1 | 0.01 5 | 0.01 7 | 0.03 1 | 0.000 7 |
| 2 | 0.09 | 0.2 3 | 0.9 9 | 0.01 0 | 0.00 4 | 0.4 7 | 0.4 7 | 0.8 8 | 0.02 2 | 0.01 9 | 0.03 7 | 0.001 4 |
| 3 | 0.1 1 | 0.2 9 | 1.1 8 | 0.00 9 | 0.00 3 | 0.7 8 | 0.5 6 | 0.9 9 | 0.03 9 | 0.02 1 | 0.04 0 | 0.002 6 |
| 4 | 0.1 2 | 0.3 6 | 1.3 3 | 0.01 0 | 0.00 3 | 0.6 5 | 0.6 0 | 1.1 7 | 0.04 5 | 0.02 3 | 0.04 0 | 0.002 8 |
| 5 | 0.1 3 | 0.4 3 | 1.4 5 | 0.01 1 | 0.00 4 | 0.6 3 | 0.6 7 | 1.4 6 | 0.04 7 | 0.02 9 | 0.04 7 | 0.002 7 |

**Table 2 Actual mechanical properties**

| Embodiment | R_{eL}iR_{p0.2}(MPa) | Rₘ/MPa | A/% | -40°C Akv/J | Cold bending |
|---|---|---|---|---|---|
| | | | | | (d=3a, 180°) |
| 1 | 823 | 851 | 17.5 | 109 132 109 117 | Qualified |
| 2 | 796 | 848 | 18.5 | 143 128 140 137 | Qualified |
| 3 | 791 | 856 | 18.5 | 180 148 150 159 | Qualified |
| 4 | 786 | 847 | 19 | 163 200 193 185 | Qualified |
| 5 | 793 | 843 | 18.5 | 186 177 179 181 | Qualified |

To improve strength and toughness of a quenched and tempered high-strength hydrogen-resistant steel plate for the pressure vessel in China, focus on increasing ultimate specification of the steel plate, the present disclosure breaks through bottlenecks of the prior art, designs and develops a new generation of high-performance quenched and tempered high-strength steel plate for the pressure vessel, and fills the technical gap in materials for large-scale high-pressure vessels in China. Rational chemical composition design and matching of heat treatment processes are key technologies. Finally, a Ni-Cr-Mo-based hydrogen-resistant composition system and multielement (micro) alloying technology are adopted, a hydrogen-resistant steel for the pressure vessel with a thickness of ≤80 mm, excellent strength and toughness is developed and produced by utilizing precipitation strengthening, solid solution strengthening, and fine-grain strengthening effects combined with appropriate rolling and heat treatment processes, aiming at achieving engineering demonstration application of the first 100-cubic-meter large-scale high-pressure hydrogen storage vessel in China. The actual mechanical properties of the steel plate are as follows: under a 25 MPa hydrogen environment, the steel plate exhibits a hydrogen embrittlement index of ≥ 0.75, internal flow detection meeting Grade TI in accordance with NB/T 47013.3, a tensile strength Rₘ of 800 to 900 MPa, elongation A of ≥ 17%, and KV₂ at -40°C of ≥ 100 J.

The steel plate provided by the present disclosure is mainly used for the construction of a high-pressure hydrogen storage vessel. A novel Ni-Cr-Mo composition design system can ensure excellent hydrogen embrittlement resistance of the steel plate, and an 800 MPa grade high-strength quenched and tempered hydrogen-resistant extra-thick steel plate with a thickness of ≤ 80 mm for a pressure vessel is produced by adopting a proper off-line quenching and high-temperature tempering heating treatment process, which breaks through bottlenecks in the prior art, satisfies requirements for high strength and toughness of the quenched and tempered hydrogen-resistant ultra-thick steel plate for the pressure vessel, improves service safety of the pressure vessel, and also lays a foundation for development, production, and application of a new generation of quenched and tempered hydrogen-resistant ultra-high-strength steel for the pressure vessel.

The 800 MPa grade quenched and tempered ultra-high-strength hydrogen-resistant steel plate for a pressure vessel and a manufacturing method for the steel plate are provided. The steel plate has comprehensive properties of high strength and toughness, high ductility, and excellent resistance to hydrogen embrittlement, and the produced steel plate is of great significance for the construction of a large-scale high-pressure hydrogen storage vessel.

## Claims

1. An 800 MPa grade quenched and tempered hydrogen-resistant ultra-high-strength steel plate for a pressure vessel, wherein the steel plate has a thickness of 12 mm, and the steel plate comprises chemical composition in percentage by weight as follows: 0.07% of C, 0.12% of Si, 0.93% of Mn, 0.011% of P, 0.005% of S, 0.27% of Cr, 0.32% of Mo, 0.61% of Ni, 0.015% of V, 0.017% of Ti, 0.031% of Als, 0.0007% of B, and the balance being Fe and inevitable impurity elements;
a manufacturing method therefor comprises smelting, continuous casting, slab heating, rolling, and heat treatment procedures, with the specific processes as follows:
(1) a smelting procedure comprises hot metal pretreatment, top-bottom combined blowing in a converter, LF (Ladle Furnace) refining, and RH (Ruhrstahl-Heraeus) refining, wherein converter smelting has an end-point temperature of 1,610°C in a total time of 42 min, and an operation under a micro positive pressure is adopted throughout the process to control an atmosphere in a ladle, a seamless pure calcium wire is fed after RH treatment, and ferroboron is added after homogenization, followed by quiescent stirring for 26 min after wire feeding;
(2) during a continuous casting procedure, slab soft reduction and electromagnetic stirring technologies are adopted to reduce center segregation and porosity, wherein a reduction at a solidification end is 6.1 mm;
(3) during a continuously cast slab heating procedure, a heating temperature is 1,150°C, and a total in-furnace time coefficient is 1.0 min/mm;
(4) during a rolling procedure, a controlled rolling and cooling process is adopted, wherein an initial rough rolling temperature is 1,050°C, an initial finishing rolling temperature is 815°C, and a final finishing rolling temperature is 800°C; and after rolling, a rolled plate is subjected to laminar cooling, with a re-reddening temperature of 680°C, and then is air-cooled to a room temperature;
(5) a heat treatment procedure comprises quenching and tempering procedures, wherein a steel plate is quenched at 850°C with a holding time coefficient of 1.6 min/mm, and tempered at 610°C with a holding time coefficient of 4.0 min/mm;
wherein actual mechanical properties of the steel plate are as follows: R_{eL}/R_{p0.2}: 823 MPa; Rₘ: 851 MPa; and A: 17.5%;
-40°C Akv/J: 109 132 109, with an average value of 117.

2. An 800 MPa grade quenched and tempered hydrogen-resistant ultra-high-strength steel plate for a pressure vessel, wherein the steel plate has a thickness of 20 mm, and the steel plate comprises chemical composition in percentage by weight as follows: 0.09% of C, 0.23% of Si, 0.99% of Mn, 0.010% of P, 0.004% of S, 0.47% of Cr, 0.47% of Mo, 0.88% of Ni, 0.022% of V, 0.019% of Ti, 0.037% of Als, 0.0014% of B, and the balance being Fe and inevitable impurity elements;
a manufacturing method therefor comprises smelting, continuous casting, slab heating, rolling, and heat treatment procedures, with the specific processes as follows:
(1) a smelting procedure comprises hot metal pretreatment, top-bottom combined blowing in a converter, LF refining, and RH refining, wherein converter smelting has an end-point temperature of 1,645°C in a total time of 43 min, and an operation under a micro positive pressure is adopted throughout the process to control an atmosphere in a ladle, a seamless pure calcium wire is fed after RH treatment, and ferroboron is added after homogenization, followed by quiescent stirring for 27 min after wire feeding;
(2) during a continuous casting procedure, slab soft reduction and electromagnetic stirring technologies are adopted to reduce center segregation and porosity, wherein a reduction at a solidification end is 6.7 mm;
(3) during a continuously cast slab heating procedure, a heating temperature is 1,185°C, and a total in-furnace time coefficient is 1.2 min/mm;
(4) during a rolling procedure, a controlled rolling and cooling process is adopted, wherein an initial rough rolling temperature is 1,030°C, an initial finishing rolling temperature is 865°C, and a final finishing rolling temperature is 820°C; and after rolling, a rolled plate is subjected to laminar cooling, with a re-reddening temperature of 665°C, and then is air-cooled to a room temperature;
(5) a heat treatment procedure comprises quenching and tempering procedures, wherein a steel plate is quenched at 875°C with a holding time coefficient of 1.3 min/mm, and tempered at 670°C with a holding time coefficient of 3.5 min/mm;
wherein actual mechanical properties of the steel plate are as follows: R_{eL}/R_{p0.2}: 796 MPa; Rₘ: 848 MPa; and A: 18.5%;
-40°C Akv/J: 143 128 140, with an average value of 137.

3. An 800 MPa grade quenched and tempered hydrogen-resistant ultra-high-strength steel plate for a pressure vessel, wherein the steel plate has a thickness of 40 mm, and the steel plate comprises chemical composition in percentage by weight as follows: 0.11% of C, 0.29% of Si, 1.18% of Mn, 0.009% of P, 0.003% of S, 0.78% of Cr, 0.56% of Mo, 0.99% of Ni, 0.039% of V, 0.021% of Ti, 0.040% of Als, 0.0026% of B, and the balance being Fe and inevitable impurity elements;
a manufacturing method therefor comprises smelting, continuous casting, slab heating, rolling, and heat treatment procedures, with the specific processes as follows:
(1) a smelting procedure comprises hot metal pretreatment, top-bottom combined blowing in a converter, LF refining, and RH refining, wherein converter smelting has an end-point temperature of 1,627°C in a total time of 41 min, and an operation under a micro positive pressure is adopted throughout the process to control an atmosphere in a ladle, a seamless pure calcium wire is fed after RH treatment, and ferroboron is added after homogenization, followed by quiescent stirring for 26 min after wire feeding;
(2) during a continuous casting procedure, slab soft reduction and electromagnetic stirring technologies are adopted to reduce center segregation and porosity, wherein a reduction at a solidification end is 5.2 mm;
(3) during a continuously cast slab heating procedure, a heating temperature is 1,220°C, and a total in-furnace time coefficient is 1.0 min/mm;
(4) during a rolling procedure, a controlled rolling and cooling process is adopted, wherein an initial rough rolling temperature is 1,045°C, an initial finishing rolling temperature is 875°C, and a final finishing rolling temperature is 840°C; and after rolling, a rolled plate is subjected to laminar cooling, with a re-reddening temperature of 680°C, and then is air-cooled to a room temperature;
(5) a heat treatment procedure comprises quenching and tempering procedures, wherein a steel plate is quenched at 925°C with a holding time coefficient of 1.5 min/mm, and tempered at 650°C with a holding time coefficient of 2.0 min/mm;
wherein actual mechanical properties of the steel plate are as follows: R_{eL}/R_{p0.2}: 791 MPa; Rₘ: 856 MPa; and A: 18.5%;
-40°C Akv/J: 180 148 150, with an average value of 159.

4. An 800 MPa grade quenched and tempered hydrogen-resistant ultra-high-strength steel plate for a pressure vessel, wherein the steel plate has a thickness of 72 mm, and the steel plate comprises chemical composition in percentage by weight as follows: 0.12% of C, 0.36% of Si, 1.33% of Mn, 0.010% of P, 0.003% of S, 0.65% of Cr, 0.60% of Mo, 1.17% of Ni, 0.045% of V, 0.023% of Ti, 0.040% of Als, 0.0028% of B, and the balance being Fe and inevitable impurity elements;
a manufacturing method therefor comprises smelting, continuous casting, slab heating, rolling, and heat treatment procedures, with the specific processes as follows:
(1) a smelting procedure comprises hot metal pretreatment, top-bottom combined blowing in a converter, LF refining, and RH refining, wherein converter smelting has an end-point temperature of 1,637°C in a total time of 44 min, and an operation under a micro positive pressure is adopted throughout the process to control an atmosphere in a ladle, a seamless pure calcium wire is fed after RH treatment, and ferroboron is added after homogenization, followed by quiescent stirring for 29 min after wire feeding;
(2) during a continuous casting procedure, slab soft reduction and electromagnetic stirring technologies are adopted to reduce center segregation and porosity, wherein a reduction at a solidification end is 5.8 mm;
(3) during a continuously cast slab heating procedure, a heating temperature is 1,253°C, and a total in-furnace time coefficient is 1.2 min/mm;
(4) during a rolling procedure, a controlled rolling and cooling process is adopted, wherein an initial rough rolling temperature is 1,050°C, an initial finishing rolling temperature is 875°C, and a final finishing rolling temperature is 830°C; and after rolling, a rolled plate is subjected to laminar cooling, with a re-reddening temperature of 630°C, and then is air-cooled to a room temperature;
(5) a heat treatment procedure comprises quenching and tempering procedures, wherein a steel plate is quenched at 890°C with a holding time coefficient of 1.8 min/mm, and tempered at 630°C with a holding time coefficient of 3.0 min/mm;
wherein actual mechanical properties of the steel plate are as follows: R_{eL}/R_{p0.2}: 786 MPa; Rₘ: 847 MPa; and A: 19%;
-40°C Akv/J: 163 200 193, with an average value of 185.

5. An 800 MPa grade quenched and tempered hydrogen-resistant ultra-high-strength steel plate for a pressure vessel, wherein the steel plate has a thickness of 80 mm, and the steel plate comprises chemical composition in percentage by weight as follows: 0.13% of C, 0.43% of Si, 1.45% of Mn, 0.011% of P, 0.004% of S, 0.63% of Cr, 0.67% of Mo, 1.46% of Ni, 0.047% of V, 0.029% of Ti, 0.047% of Als, 0.0027% of B, and the balance being Fe and inevitable impurity elements;
a manufacturing method therefor comprises smelting, continuous casting, slab heating, rolling, and heat treatment procedures, with the specific processes as follows:
(1) a smelting procedure comprises hot metal pretreatment, top-bottom combined blowing in a converter, LF refining, and RH refining, wherein converter smelting has an end-point temperature of 1,642°C in a total time of 45 min, and an operation under a micro positive pressure is adopted throughout the process to control an atmosphere in a ladle, a seamless pure calcium wire is fed after RH treatment, and ferroboron is added after homogenization, followed by quiescent stirring for 28 min after wire feeding;
(2) during a continuous casting procedure, slab soft reduction and electromagnetic stirring technologies are adopted to reduce center segregation and porosity, wherein a reduction at a solidification end is 6.3 mm;
(3) during a continuously cast slab heating procedure, a heating temperature is 1,275°C, and a total in-furnace time coefficient is 1.1 min/mm;
(4) during a rolling procedure, a controlled rolling and cooling process is adopted, wherein an initial rough rolling temperature is 1,040°C, an initial finishing rolling temperature is 880°C, and a final finishing rolling temperature is 850°C; and after rolling, a rolled plate is subjected to laminar cooling, with a re-reddening temperature of 630°C, and then is air-cooled to a room temperature;
(5) a heat treatment procedure comprises quenching and tempering procedures, wherein a steel plate is quenched at 910°C with a holding time coefficient of 1.6 min/mm, and tempered at 645°C with a holding time coefficient of 3.0 min/mm;
wherein actual mechanical properties of the steel plate are as follows: R_{eL}/R_{p0.2}: 793 MPa; Rₘ: 843 MPa; and A: 18.5%;
-40°C Akv/J: 186 177 179, with an average value of 181.
